(19) Europäisches Patentamt
European Patent Office
Office européen des brevets

(11) **EP 1 117 708 B1**

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(21) Anmeldenummer: **99938254.2**

(22) Anmeldetag: **15.07.1999**

(51) Int Cl.[7]: **C08F 110/10**, C08F 4/06, C08F 4/12, C08F 4/18, C08F 4/24, C08F 4/26

(86) Internationale Anmeldenummer:
**PCT/EP1999/005013**

(87) Internationale Veröffentlichungsnummer:
**WO 2000/008075 (17.02.2000 Gazette 2000/07)**

(54) **VERFAHREN ZUR HERSTELLUNG VON HALOGENFREIEM, REAKTIVEM POLYISOBUTEN**
METHOD FOR PRODUCING HALOGEN-FREE REACTIVE POLYISOBUTENE
PROCEDE DE PRODUCTION DE POLYISOBUTENE REACTIF EXEMPT D'HALOGENE

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **31.07.1998 DE 19834593**

(43) Veröffentlichungstag der Anmeldung:
**25.07.2001 Patentblatt 2001/30**

(73) Patentinhaber: **BASF AKTIENGESELLSCHAFT**
**67056 Ludwigshafen (DE)**

(72) Erfinder:
- **SIGWART, Christoph**
  **D-69198 Schriesheim (DE)**
- **NARBESHUBER, Thomas**
  **D-49477 Ibbenbüren (DE)**
- **GEHRER, Eugen**
  **A-6830 Rankweil (AT)**
- **FISCHER, Rolf**
  **D-69121 Heidelberg (DE)**
- **STEINBRENNER, Ulrich**
  **D-67063 Ludwigshafen (DE)**
- **LIANG, Shelue**
  **D-67071 Ludwigshafen (DE)**

(56) Entgegenhaltungen:
**EP-A- 0 825 205**
**DE-A- 19 520 078**
**DE-A- 19 528 942**
**DE-A- 19 704 482**
**DE-A- 19 734 176**
**US-A- 5 663 470**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 117 708 B1

## Beschreibung

Die vorliegende Erfindung betrifft ein verbessertes Verfahren zur Herstellung von halogenfreiem, reaktivem Polyisobuten mit einem Gehalt an endständigen Doppelbindungen von mehr als 60 mol-% und einem mittleren Molekulargewicht $M_n$ von 800 bis 3000 Dalton durch kationische Polymerisation von Isobuten in flüssiger Phase an einem sauren, im wesentlichen halogenfreien heterogenen Katalysator, wobei durch Teilumsatz der Gehalt an endständigen Doppelbindungen erhöht ist.

Bei der Isobutenpolymerisation bildet sich ein untrennbares Gemisch aus Polyisobutenen mit unterschiedlicher Position der Doppelbindung in den einzelnen Polyisobutenen. Polyisobutene der Formel I

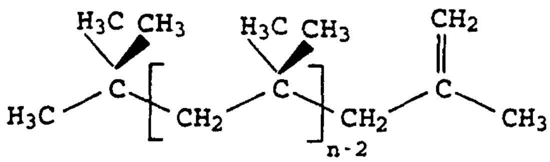 I,

in der n den Polymerisationsgrad angibt, der sich wiederum aus dem mittleren Molekulargewicht $M_n$ des hergestellten Polyisobutens ergibt, enthalten endständige C-C-Doppelbindungen vom Vinylidentyp, die aufgrund ihrer Stellung im Polyisobutenmolekül auch als $\alpha$-olefinische Doppelbindungen bezeichnet werden. Dementsprechend werden die Doppelbindungen in Polyisobutenen der Formel II

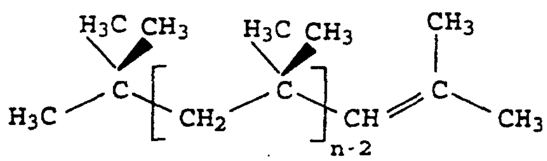 II,

als $\beta$-olefinisch bezeichnet. Werden bei der Polymerisation von Isobuten keine besonderen Maßnahmen ergriffen, so entsteht ein statistisches Gemisch aus Polyisobutenen mit $\alpha$-olefinischen, also endständigen, $\beta$-olefinischen und weiter im Inneren des Polyisobutenmoleküls gelegenen Doppelbindungen. Der Gehalt eines nach einem bestimmten Herstellverfahren hergestellten Polyisobuten-Produkts an endständigen Doppelbindungen als auch der Gehalt an $\beta$-olefinischen Doppelbindungen wird in mol-% angegeben.

Die Herstellung der Polyisobutene ist beispielsweise in H. Güterbock, Polyisobutylene und Mischpolymerisate, S. 77-104, Springer-Verlag, Berlin, 1959, beschrieben. Sie erfolgt üblicherweise durch Lewissäure-katalysierte Isobutenpolymerisation, wobei als Lewissäuren Aluminiumchlorid, Alkylaluminiumchlorid oder Bortrifluorid eingesetzt werden. Die hierbei erhaltenen Polymere weisen jedoch mit weniger als 10 mol-% einen relativ geringen Gehalt an endständigen C-C-Doppelbindungen vom Vinyliden-Typ auf.

Dagegen besitzt reaktives Polyisobuten (PIB) mit Molekulargewichten von üblicherweise 500 bis 5000 Dalton einen hohen Gehalt an endständigen Vinylidengruppen, bevorzugt von mehr als 50 mol-%. Diese reaktiven Polyisobutene werden als Zwischenprodukte zur Herstellung von Schmiermittel- und Kraftstoff-Additiven, wie sie beispielsweise in DE-A 27 02 604 beschrieben sind, verwendet. Zur Herstellung dieser Additive wird Polyisobuten zunächst mit Maleinsäureanhydrid umgesetzt. Dabei reagieren bevorzugt die endständigen Doppelbindungen vom Vinyliden-Typ, wohingegen Doppelbindungen, die sich weiter im Inneren des Makromoleküls befinden, je nach Stellung im Molekül in geringerem Maße oder gar nicht reagieren. Die gebildeten Polyisobuten-Maleinsäureanhydrid-Addukte werden anschließend durch Reaktion mit bestimmten Aminen in die entsprechenden Additive überführt. Ein hoher Anteil an endständigen Doppelbindungen ist daher für Polyisobutene, die als Ausgangsstoffe für die oben genannten Additive eingesetzt werden, unbedingt erforderlich. Ähnliches gilt für die Herstellung der ebenfalls als Kraftstoffadditive verwendeten Polyisobutenamine gemäß EP-A 244 616, die durch Hydroformylierung des reaktiven Polyisobutens und anschließende reduktive Aminierung des dabei erhaltenen Polyisobutenaldehyds erzeugt werden. Hierbei wird ebenfalls Polyisobuten mit einem hohen Gehalt an endständigen Doppelbindungen bevorzugt eingesetzt, doch werden bei der Hydroformylierung mit Kobaltkatalysatoren, aufgrund von deren Doppelbindungsisomerisierungsaktivität, auch $\beta$-olefinische Polyisobutene zum gewünschten Produkt hydroformyliert.

Die Herstellung von reaktivem Polyisobuten ist vor allem in Form der homogenkatalytischen Polymerisation von Isobuten bekannt. Beispielsweise wird gemäß DE-A 27 02 604 durch Umsetzung von Isobuten in Gegenwart von

Bortrifluorid ein Polyisobuten-Produkt erhalten, welches einen Gehalt an endständigen Doppelbindungen von bis zu 88 % aufweist. EP-A 145 235 lehrt die Polymerisation von Isobuten in Gegenwart eines Komplexes aus Bortrifluorid und einem primären Alkohol in einem Temperaturbereich von -100°C bis +50°C, wobei Produkte mit ähnlich hohen Vinylidendoppelbindungs-Gehalten erhalten werden. Mit Komplexen aus Bortrifluorid und sekundären Alkoholen als Katalysator kann nach US 5 286 823 ebenfalls hochreaktives Polyisobuten hergestellt werden.

Die genannten homogen katalysierten Verfahren haben allerdings den Nachteil, daß die verwendeten Lewissäure-Katalysatoren korrosiv sind und die Gefahr besteht, daß neben dem gewünschten, reaktiven Polyisobuten halogenierte, polymere Nebenprodukte entstehen, die praktisch nicht vom PIB abtrennbar sind und sich nachteilig auf die Produkt- und Weiterverarbeitungseigenschaften des PIB auswirken. Die Abtrennung des Homogenkatalysators erfolgt bei diesen Verfahren üblicherweise durch Quenchung mit einem Nucleophil, wodurch der Katalysator zerstört wird, und anschließende extraktive Abtrennung des PIB aus der Quenchmischung. Diese zusätzlichen Aufarbeitungsschritte stellen einen weiteren Nachteil des homogen katalysierten Verfahrens dar.

Aus WO 94/28036 ist ferner die Herstellung von Polyisobuten mit Hilfe heterogener Lewissäure-artiger Katalysatoren bekannt. Als solche werden im Reaktionsmedium unlösliche Salze von Elementen aus der III., IV., V. und VI. Nebengruppe des Periodensystems der Elemente eingesetzt, vorzugsweise deren Halogenide, Sulfate, Perchlorate, Trifluormethansulfonate, Nitrate und Fluorsulfonate. Zum Abbruch der Polymerisation wird das Reaktionsmedium mit methanolischer Ammoniaklösung versetzt, wodurch die betreffenden Katalysatoren zerstört oder zumindest in erheblichem Maße inaktiviert werden.

Die Herstellung von Polyisobuten mit Hilfe heterogener nicht salzartiger Katalysatoren ist ebenfalls bekannt. In US 4 288 649 ist z.B. ein Verfahren zur Herstellung von Polyisobuten eines mittleren Molekulargewichts von >1250 Dalton durch die Polymerisation von Isobuten-haltigen $C_4$-Kohlenwasserstoff-Gemischen an halogenierten Aluminiumoxid-Katalysatoren beschrieben. Die Katalysatoren werden durch die Behandlung des Aluminiumoxids mit einem Halogenierungsmittel, vorzugsweise mit einem Chlorierungsmittel, insbesondere mit Tetrachlorkohlenstoff, bei erhöhter Temperatur hergestellt. Dieses Verfahren hat den Nachteil, daß ein Teil des Chlors vom Katalysator auf das sich bildende Polymer übertragen wird. Beispielsweise führt die Polymerisation einer Mischung von n-Butan, Isobutan und Isobuten an einem solchermaßen hergestellten, chlorierten Aluminiumoxid-Katalysator nach 2 Stunden Reaktionszeit zu einem Polyisobuten-Produkt mit einem Chlorgehalt von 46 ppm.

US 5 326 920 betrifft ein Verfahren zur Isobutenpolymerisation, in dem ein oxidisches Trägermaterial, vorzugsweise Siliciumdioxid, das mit einem daran gebundenen Metallchlorid, vorzugsweise einem Aluminiumchlorid, aktiviert worden ist, als Heterogenkatalysator verwendet wird. Besonders bevorzugt wird nach dieser Schrift ein $SiO_2$-$AlCl_2$-Katalysator verwendet, in dem $AlCl_2$-Gruppen über Sauerstoffbrücken am $SiO_2$-Träger verankert sind. Die erhaltenen Polyisobuten-Produkte haben den Nachteil einer extrem breiten Molekulargewichtsverteilung D von 8 bis 14, eines geringen Gehalts an endständigen Doppelbindungen und eines Chlorgehalts im ppm-Bereich. Außerdem ist bei diesem Verfahren die Anwesenheit von Promotoren, wie Wasser, Alkoholen, Alkylhalogeniden oder Chlorwasserstoff, erforderlich, damit eine für den technischen Betrieb hinreichende Katalysatoraktivität erzielt wird. Ähnliche Katalysatorsysteme werden in WO 95/26815, WO 95/26816, WO 95/26814 und WO 96/26818 für die Isobutenpolymerisation beschrieben.

Gemäß JP-A 139 429/1981 werden Zirkoniumdioxid- und Molybdänoxidhaltige Heterogenkatalysatoren zur Herstellung von Isobutenoligomeren eines Molekulargewichts von weniger als 300 Dalton eingesetzt. Zur Erhöhung ihrer Aktivität kann diesen Katalysatoren noch Aluminiumfluorid zugemischt werden. Beispielsweise wird gemäß dieser Schrift bei der Umsetzung eines Isobuten-haltigen $C_4$-Schnitts (Zusammensetzung: 46 % Isobuten, 28 % 1-Buten, 8 % 2-Butene, 12 % n-Butan, 5 % Isobutan, 1 % 1,3-Butadien) bei 120°C an einem $MoO_3$-$ZrO_2$-Katalysator(Molybdängehalt 13 Gew.-%, berechnet als $MoO_3$) eine Mischung aus Isobutenoligomeren erhalten, die zu 29 %, 49 % bzw. 19 % aus Di-, Tri- bzw. Tetraisobuten besteht.

In EP-A 825 205 wird unter anderem die kontinuierliche Polymerisation von Rein-Isobuten an heterogenen Katalysatoren (Heteropolysäuren) beschrieben, jedoch ohne Angaben über eine bestimmte Reaktionsführung zur Erzielung von Polyisobuten mit einem hohen Anteil von endständigen Doppelbindungen, obgleich dessen Herstellung ein Ziel dieser Europäischen Patentanmeldung ist. Es hat sich jedoch gezeigt, daß die Wahl der Heteropolysäuren als Katalysatoren zur Erreichung dieses Ziels nicht ausreicht.

Gemäß DE-A 19 52 8942 wird ferner niedermolekulares reaktives und halogenfreies Polyisobuten mit speziellen, Zirkonoxid als Trägermaterial enthaltenden Katalysatoren hergestellt, wobei die Polymerisation auch mit Isobuten enthaltenden KohlenwasserstoffGemischen und kontinuierlich durchgeführt werden kann. Bei der kontinuierlichen Ausführung der Polymerisation soll das mittlere Molekulargewicht durch Variation der Katalysatorbelastung und Verweilzeit eingestellt werden. In den Ausführungsbeispielen wurde allerdings die Polymerisation nur diskontinuierlich ausgeführt. In den mit einem Isobuten enthaltenden Kohlenwasserstoff-Gemisch durchgeführten Beispielen 11 bis 16 wurde die Umsetzung teilweise mit niedrigem Umsatz ausgeführt und teilweise hohe, teilweise auch niedrige Selektivitäten für Polyisobuten mit $\alpha$-ständiger Doppelbindung erhalten. Ähnliche Ergebnisse wurden laut den älteren deutschen Anmeldungen DE-A 1 97 04 482 und DE-A 1 97 34 176 mit anderen Katalysatoren gefunden.

Aus der EP-A 825 205 ist ein Verfahren zur Polymerisation von Olefinen in Gegenwart von Heteropolysäuren bekannt. Zu den Produkten zählt auch Polyisobuten mit einem hohen Anteil an endständigen Vinyliden-Einheiten.

Es bestand nun die Aufgabe, ein Verfahren vorzuschlagen, das in kontinuierlicher Produktion über einem heterogenen Katalysator in reproduzierbarer Weise die Herstellung von niedermolekularem Polyisobuten mit hohem $\alpha$-Doppelbindungsanteil erlaubt.

Diese Aufgabe wurde erfindungsgemäß gelöst durch ein Verfahren zur Herstellung von halogenfreiem, reaktivem Polyisobuten mit einem Gehalt an endständigen Doppelbindungen von mehr als 60 mol-% und einem mittleren Molekulargewicht $M_n$ von 800 bis 3000 Dalton durch kationische Polymerisation von Isobuten in flüssiger Phase an einem sauren, im wesentlichen halogenfreien heterogenen Katalysator, bei dem man

a) ein Isobuten enthaltendes Kohlenwasserstoffgemisch von im wesentlichen $C_4$-Kohlenwasserstoffen mit einem Isobutengehalt von 10 bis 80 Gew.-% als Edukt verwendet und

b) eine kontinuierliche Polymerisation bei -30 bis 0°C und bei mittleren Verweilzeiten des Edukts von höchstens einer Stunde durchführt, wobei man Temperatur und Verweilzeit so wählt, daß der Umsatz des Isobutens weniger als 60 % beträgt und wobei man nach Trennung von dem entstandenen Polyisobuten in dem abreagierten Kohlenwasserstoff-Gemisch das Isobuten entweder anreichert und in die Polymerisation zurückführt oder einer mit der Polymerisation gekoppelten anderen Isobuten-Umsetzung zuführt.

Erfindungsgemäß können prinzipiell alle sauren, im wesentlichen halogenfreie, Katalysatoren eingesetzt werden, die die Isobuten-Polymerisation unter den angegebenen Temperaturen katalysieren. Bevorzugt sind Katalysatoren auf Basis Zirkondioxid, wie sie in DE-A 19 52 8942 beschrieben sind, geträgerte W-, Mo-Oxide gemäß DE-A 1 97 04 482 und Heteropolysäuren bzw. deren Salze, wie sie in DE-A 1 97 34 176 und in EP-A 925 205 beschrieben sind. Besonders bevorzugt sind Zirkondioxid-Systeme, die $PO_4$ und/oder $SO_4$ enthalten und darüberhinaus mit Oxiden der Übergangsmetalle wie Mn, Fe dotiert sind (DE-A 19 52 8942) oder Salze entwässerter Cshaltiger Mo- oder W-Heteropolysäuren.

Die erfindungsgemäß anzuwendenden Katalysatoren werden zweckmäßigerweise vor ihrem Einsatz in an sich bekannter Weise zu Formkörpern, wie Tabletten, Kugeln, Zylindern, Ringen oder Spiralen, verformt oder zu Splitt zerkleinert und in dieser Form vorzugsweise in einer Festbettanordnung im Reaktor eingesetzt oder sie werden zu Pulver vermahlen und in dieser Form, z.B. als Suspensionskatalysatoren, verwendet.

Die in den genannten Patentschriften beschriebenen Katalysatoren sind im wesentlichen folgende:

A) Zirkondioxid-Systeme, die mit Elementen der I. - VIII. Nebengruppe oder II. - VI. Hauptgruppe des Periodensystems der Elemente jeweils in Form sauerstoffhaltiger Verbindungen dotiert bzw. promotiert sind. Bevorzugte Promotoren der Nebengruppen des Periodensystems der Elemente sind sauerstoffhaltige Verbindungen der Elemente Cu, Ag, Zn, Sc, Y, La, Ce, Nd, Pr, Ti, Hf, V, Nb, Ta, Mo, W, Re, Co und Ni und insbesondere von Mn und Fe. Bevorzugte Promotoren der Hauptgruppen des Periodensystems der Elemente sind sauerstoffhaltige Verbindungen der Elemente Ca, Mg, B, Ga, Si und Sn und insbesondere der Elemente Al, S und P. Bevorzugte Kombinationen von promotoraktiven Elementen sind z.B. die Kombinationen aus S und/oder P mit Fe, Fe/Mn, Mn oder Fe/Al. Ganz besonders bevorzugt ist die Kombination S und/oder P mit Mn.

B) Heterogene Polymerisationskatalysatoren aus Oxiden der Elemente der V. und VI. Nebengruppe des Periodensystems der Elemente ("Vollkatalysatoren") oder aus geträgerten Oxiden der Elemente der V. und VI. Nebengruppe des Periodensystems der Elemente. Bevorzugte Oxide der Vollkatalysatoren und bevorzugte Promotoren der geträgerten Oxide sind Oxide der Elemente V, Cr, Mo und W. Besonders bevorzugt sind Oxide des Molybdäns. Als Trägermaterialien kommen vor allem die Oxide der Elemente B, Pb, La und besonders die Oxide der Elemente Al, Si, Fe und Ti in Betracht.

C) Heteropolysäuren (als Voll- oder Trägerkatalysatoren): Bevorzugt sind Heteropolysäuren mit Wolfram oder Molybdän als "Polyatom", das partiell durch Vanadin ersetzt sein kann, und mit Silizium oder bevorzugt Phosphor als Zentralatom. Beispiele für Molybdän-haltige Heteropolysäuren in Form der freien Säuren sind: Dodecamolybdatophosphorsäure ($H_3PMo_{12}O_{40}$ * x $H_2O$); Dodecamolybdatokieselsäure ($H_4SiMo_{12}O_{40}$ * x $H_2O$), Dodecawolframatophosphorsäure ($H_3PW_{12}O_{40}$ * x $H_2O$) und Dodecawolframatokieselsäure ($H_4SiW_{12}O_{40}$ * x $H_2O$). Bevorzugte Trägermaterialien sind: Aktivkohle, $SiO_2$, $TiO_2$, $ZrO_2$.

D) Salze der Heteropolysäuren (als Voll- oder Trägerkatalysatoren): Bei den Heteropolysäuresalzen sind die WasserstoffIonen (Protonen) der freien Heteropolysäuren ganz oder vorzugsweise partiell durch andere Ionen, z.B. Metallionen oder Ammoniumionen ersetzt. Insbesondere kommen Systeme in Betracht, bei denen die Protonen

der Wolfram-haltigen oder bevorzugten Molybdän-haltigen HPA durch Ionen der Elemente Mn, Fe, Co, Ni, Cu, Ag, Zn, Na, K, Cs, Mg, Ca, Ba, B, Al, Bi oder Ammonium-Ionen ($NH_4^+$) bzw. alkylsubstituierte Ammonium-Ionen ($NR_4^+$) ersetzt sind. Besonders bevorzugt sind Cäsiumsalze von Wolfram-haltigen und insbesondere Molybdän-haltigen Heteropolysäuren ("HPA)". Trägermaterialien sind in der Regel Aktivkohle, $SiO_2$, $TiO_2$ oder $ZrO_2$.

Die erfindungsgemäß anzuwendenden Katalysatoren können praktisch unbeschränkt, vor allem unter Ausschluß von Feuchtigkeit, gelagert werden. Feucht gewordene Katalysatoren werden vorteilhaft vor ihrer Verwendung bei Atmosphärendruck oder unter vermindertem Druck getrocknet, bei Atmosphärendruck bei 180 bis 250°C, bei vermindertem Druck auch bei tieferen Temperaturen.

Als Einsatzstoff werden in der Regel Isobuten enthaltende Kohlenwasserstoffgemische von im wesentlichen $C_4$-Kohlenwasserstoffen eingesetzt, die z.B. beim Cracken von Kohlenwasserstoffen in großen Mengen anfallen. So fallen in thermischen Crackverfahren (Steamcracker) Isobuten-haltige $C_4$-Schnitte an, die zur weitgehenden Entfernung des Butadiens noch zusätzlich selektiv hydriert oder extraktiv mit N-Methylpyrrolidon destilliert werden. Das hierbei erzeugte sogenannte "Raffinat I" ist zur PIB-Synthese gut geeignet und besitzt typischerweise im wesentlichen folgende Zusammensetzung: 44 bis 49 % Isobuten, 24 bis 28 % 1-Buten, 19 bis 21 % 2-Buten, 6 bis 8 % n-Butan, 2 bis 3 % i-Butan (Weissermel, Arpe, "Industrielle Organische Chemie", Verlag Chemie, Weinheim, 1994, S. 76).

Alternativ können Isobuten-haltige $C_4$-Ströme eingesetzt werden, die durch katalytisches Cracken in Raffinerieprozessen gewonnen werden. Dieser sogenannte $C_4$-FCC-Schnitt (Fluid Catalytic Crakking) ist typischerweise folgendermaßen zusammengesetzt: 15 % Isobuten, 12 % 1-Buten, 23 % 2-Buten, 13 % n-Butan, 37 % i-Butan.

Besonders bevorzugt werden jedoch Isobuten/Isobutan-Gemische verwendet, die aus n-Butan durch Isomerisierung z.B. nach dem Butamer®-Prozeß (UOP) und anschließend z.B. nach dem Catofin®-Prozeß durch Dehydrierung gewonnen werden können (Weissermel, Arpe, "Industrielle Organische Chemie", Verlag Chemie, Weinheim, 1994, S. 79, 80). Bei der Isobutan-Dehydrierung nach dem Catofin®-Prozeß (ABB Lummus Crest) wird typischerweise eine Isobuten-Selektivität von 92 bis 93 mol-% bei 65 % Isobutan-Umsatz erhalten. Alternative Prozesse wie Oleflex® (UOP), STAR (Phillips), FDP (Snamprogetti/Yarsintez) arbeiten bei geringeren Isobutan-Umsätzen (45 bis 55 %) und ähnlich hohen Isobuten-Selektivitäten (87 bis 92 mol-%) (PERP-Report Butadiene/Butylenes 92-1, 1993, CHEM SYSTEMS, S. 32).

Der Einsatz von Isobuten/Isobutan-Gemischen als Einsatzstoffe zur Polyisobuten-Synthese ist bevorzugt, da bei der erfindungsgemäßen Polymerisation bei Isobuten-Teilumsatz ein halogenfreier Reststrom erhalten wird, der praktisch ausschließlich aus $C_4$-Kohlenwasserstoffen besteht, welcher nach destillativer Abtrennung vom Polyisobuten einer vielfältigen Nutzung zugeführt werden kann. Beispielsweise sei genannt:

- Destillative Trennung des Rest-$C_4$-Stroms (Isobutan (Sdp.

- 12°C)/Isobuten (Sdp. -7°C)) in Isobutan (Kopfprodukt, muß nicht Isobuten-frei sein) und Isobutan/Isobuten-Gemisch (Sumpf) entsprechend der Feed-Zusammensetzung und anschließende Rückführung des Sumpfprodukts in die Polymerisation und Rückführung des Isobutans in die Dehydrierung (bevorzugte Ausführungsform).

- Rückführung des Rest-$C_4$-Stroms in die Dehydrierung.

- Verwendung des Rest-$C_4$-Stroms für die Synthese von Methyltert.-butylester (MTBE).

Die Polymerisation wird kontinuierlich bei Temperaturen von im allgemeinen -30 bis 0°C, vorzugsweise -25 bis -10°C, unter Atmosphärendruck oder erhöhtem Druck, insbesondere unter dem Eigendruck des Reaktionssystems, durchgeführt, so daß das Isobuten-haltige Kohlenwasserstoff-Gemisch flüssig bleibt.

Überraschenderweise zeigte sich, daß immer dann, wenn durch entsprechende Wahl der Reaktionsparameter ein Isobuten-Teilumsatz (max. 60 %, besonders bevorzugt max. 50 % und insbesondere max. 40 %) erzielt wurde, auch die $\alpha$-Olefingehalte der PIB-Produkte besonders hoch ausfielen (d.h. regelmäßig $\alpha$ >60 mol-%, bevorzugt > 65 mol-% und insbesondere >68 mol-%).

Es können herkömmliche Reaktoren wie Schlaufenreaktoren oder Reaktorkaskaden bei der erfindungsgemäßen kontinuierlichen Polymerisation eingesetzt werden. Desgleichen können in Sumpf oder Rieselfahrweise betriebene Rohrreaktoren oder Rohrreaktorkaskaden verwendet werden. Die erfindungsgemäß anzuwendenden Katalysatoren sind dabei, vorzugsweise bei Verwendung von Schlaufenreaktoren oder Rohrreaktoren, zweckmäßig in einem Festbett angeordnet oder in Form von Pulver im Reaktormedium suspendiert. Typische Katalysatorbelastungen sind 10 kg Isobuten/kg Kat.*h bis 0,1 kg/kg*h, bevorzugt 7 kg bis 0,2 kg/kg*h, besonders bevorzugt 5 bis 0,32 kg/kg*h. Typische Verweilzeiten, je nach Ausführungsform, sind 0,05 bis 1 h, bevorzugt 0,1 bis 0,9 h, besonders bevorzugt 0,2 bis 0,8 h.

Die Isobuten-Polymerisation kann in An- oder Abwesenheit von vorzugsweise unpolaren, halogenfreien Lösungsmitteln, vorzugsweise Kohlenwasserstoffen, vorgenommen werden. Im einzelnen sind Butane, Pentane, Hexane, Heptane und Octane, die linear oder verzweigt sein können, zu nennen. Besonders bevorzugt sind Butane, Pentane und Hexane. Da die Isobutenpolymerisation exotherm ist, kann es vorteilhaft sein, die verwendeten Reaktoren mit Vorrichtungen zur Innen- oder Außenkühlung auszustatten.

Die Einstellung des gewünschten mittleren Molekulargewichts $M_n$ des Polyisobutens kann durch die Variation der Reaktionsparameter bewirkt werden, insbesondere durch Variation der Temperatur, Verweilzeit, Lösungsmittelmenge und Katalysatorbelastung. Die Verweilzeit beträgt im allgemeinen 0,01 bis 1 Stunde, vorzugsweise 0,1 bis 0,8 Stunden. Die Molgewichte liegen im Bereich $M_n$ = 800 bis 3000, bevorzugt $M_n$ = 1000 bis 2300.

Die Isolierung des Polyisobutens aus der Polymerisationsmischung birgt im allgemeinen keine verfahrenstechnischen Besonderheiten und kann, bei Verwendung eines suspendierten Katalysators nach dessen Abtrennung, beispielsweise durch Filtration, Zentrifugation oder Dekantieren, destillativ erfolgen, wobei zweckmäßigerweise zunächst leichtflüchtige Bestandteile der Polymerisationsmischung, wie nichtumgesetztes Isobuten, im Ausgangsmaterial enthaltene oder als Lösungsmittel zugesetzte Kohlenwasserstoffe, abdestilliert und anschließend höhersiedende Nebenprodukte, beispielsweise niedermolekulare Isobutenoligomere, vom Polyisobuten destillativ abgetrennt werden.

Das erfindungsgemäße Verfahren ermöglicht die Herstellung von reaktivem, halogenfreiem Polyisobuten eines mittleren Molekulargewichts $M_n$ von im allgemeinen 800 bis 3000 Dalton und einem Gehalt an endständigen Doppelbindungen von mehr als 60 mol-% in besonders wirtschaftlicher Weise.

## Beispiele

### I. Herstellung der Katalysatoren

#### I.1 Katalysator A (Suspensionskatalysator)

300 g feuchte $Zr(OH)_4$-Paste (Firma MEL-Chemicals, Manchester, England, mit einem Zirkoniumgehalt, berechnet als $ZrO_2$, von 47 Gew.-%) wurden mit einer Lösung bestehend aus 1000 ml $H_2O$ dest., 10,5 g $MnSO_4*H_2O$ und 16,4 g $(NH_4)_2SO_4$ 1 Stunde bei Raumtemperatur gerührt. Anschließend wurde am Rotationsverdampfer eingedampft und der Rückstand 5 Stunden bei 110°C getrocknet und 3 Stunden bei 650°C kalziniert. Es wurden 240 g Katalysator A in Pulverform folgender Zusammensetzung erhalten:

| | |
|---|---|
| Zr | 69 Gew.-% |
| Mn | 0,7 Gew.-% |
| S | 1,3 Gew.-% |

Analysenmethoden analog DE-A 19528942.

#### I.2 Katalysator B (Festbettkatalysator)

$ZrO_2$-Paste (175 g, entspricht ca. 140 g $ZrO_2$) wurde in einer wäßrigen Lösung (500 ml) von $(NH_4)_2NO_3$ (20,6 g) suspendiert und 30 Minuten bei Raumtemperatur gerührt. Nach Abzug des Lösungsmittels wurde der Rückstand bei 180°C unter Normaldruck 16 Stunden lang getrocknet. Anschließend wurde der Feststoff in einer wäßrigen Lösung (500 ml) von $Mn(NO_3)_2*4H_2O$ (6,6 g) suspendiert und 30 Minuten bei Raumtemperatur gerührt. Nach Abzug des überschüssigen Wassers wurde der Rückstand (242 g) zu Strängen von 2 mm Durchmesser verformt, die anschließend bei 110°C über Nacht getrocknet und bei 700°C in Luftatmosphäre 16 h lang calciniert wurden. Es wurden 110 g Katalysator B folgender Zusammensetzung erhalten:

| | |
|---|---|
| Zr | 69 Gew.-% |
| Mn | 1,0 Gew.-% |
| S | 0,9 Gew.-% |

#### I.3 Katalysator C (Festbettkatalysator)

Zu einer Suspension von 85,37kg $ZrO_2$-Paste (entspricht 19,63 kg $ZrO_2$) in 50 l vollentsalztem Wasser wurde bei Raumtemperatur unter Rühren zunächst eine Lösung von 2,11 kg $(NH_4)_2SO_4$ in 5 kg Wasser, dann eine Lösung von 1,2 kg $Mn(NO_3)_2*4H_2O$ in 2 kg Wasser und schließlich noch 18 kg Wasser zugegeben. Diese Mischung wurde bei 160°C versprüht. Von den 16 kg Sprühpulver wurden 4,7 kg unter Zugabe von 3,87 kg Wasser 40 Minuten lang geknetet und dann zu 3,5 mm-Strängen verformt, die anschließend 23 Stunden lang bei 120°C getrocknet und 2

Stunden lang bei 700°C calciniert wurden. Es wurden 2,33 kg (3 mm-Stränge, Rest Abrieb) Katalysator C folgender Zusammensetzung erhalten:

| | |
|---|---|
| Zr | 65,5 Gew.-% |
| Mn | 1,3 Gew.-% |
| S | 1,8 Gew.-% |

II. Polymerisation von Isobuten

Das Zahlenmittel des Molekulargewichts $M_n$, hierin auch als mittleres Molekulargewicht $M_n$ bezeichnet, wurde mittels Gelpermeationschromatographie (GPC) bestimmt, wobei standardisierte Polyisobutene als Eichsubstanzen verwendet wurden. Das Zahlenmittel $M_n$ wurde aus den erhaltenen GPC-Chromatogrammen nach der Gleichung

$$M_n = \Sigma\, c_i \,/\, \Sigma\, (c_i \,/\, M_i)$$

berechnet, wobei $c_i$ für die Konzentration der einzelnen Polymerspezies im erhaltenen Polymergemisch und $M_i$ für das Molekulargewicht der einzelnen Polymerspezies i steht. Die Molekulargewichtsverteilung, auch Dispersität (D) genannt, wurde aus dem Verhältnis des Gewichtsmittels ($M_w$) und des Zahlenmittels ($M_n$) nach der Gleichung

$$D = M_w \,/\, M_n$$

bestimmt, wobei das Gewichtsmittel $M_w$ aus den erhaltenen CPC-Chromatogrammen nach folgender Gleichung ermittelt wurde:

$$M_w = \Sigma\, c_i\, M_i \,/\, \Sigma\, c_i$$

Der α- und β-Gehalt (Formel I und II) wurde $^{13}$C-NMR-spektroskopisch bestimmt. Die C-Atome der endständigen Doppelbindung der α-Olefine I zeigen im $^{13}$C-NMR-Spektrum Signale bei einer chemischen Verschiebung von 114,4 ppm ($CH_2$) und 143,6 ppm (C). Die Signale der C-Atome der trisubstituierten Doppelbindung der β-Olefine II liegen im $^{13}$C-NMR-Spektrum bei 127,9 (= CH-R) und 135,4 ppm (= $C(CH_3)_2$). Durch Auswertung der Signalflächen und Vergleich mit den Signalflächen der übrigen olefinischen C-Atome kann der Gehalt an α- und β-Olefin bestimmt werden. Als Lösungsmittel diente deuteriertes Chloroform ($CDCl_3$) und als interner Standard Tetramethylsilan.

Kontinuierliche Isobuten-Polymerisation am Festbett mit "Raffinat I"/n-Hexan-Gemisch als Feed. "Raffinat I"-Zusammensetzung: 43 % Isobuten, 24 % Buten-1, 14 % Buten-2, 18 % Butane.

Beispiel 1

Ein 25-ml-Rohrreaktor wurde unter Argon mit 25 g Katalysator B, der zuvor nochmals bei 180°C/0,3 mbar getrocknet worden war, in Form von 2 mm-Strängen gefüllt. Anschließend wurde bei -25°C/6 bar ein "Raffinat I"/n-Hexan-Gemisch (Gew.-Verhältnis 1 : 1, "Raffinat I"), das über Molekularsieb 3 Ä getrocknet worden war, kontinuierlich durch den Reaktor gefahren (60 g/h). Die Katalysatorbelastung betrug 0,5 g Isobuten/g Kat. *h, die mittlere Verweilzeit ca. 0,1 h. Der Reaktor wurde in Sumpffahrweise mit Produktrückführung (4 kg/h) betrieben. Das Reaktionsgemisch wurde destillativ aufgearbeitet, wobei nichtumgesetztes Isobuten und die übrigen $C_4$-Kohlenwasserstoffe bei Raumtemperatur abgedampft wurden und das zugesetzte Lösungsmittel bei Raumtemperatur und unter langsamer Absenkung des Drucks bis auf 0,3 mbar abdestilliert wurde. Der Isobuten-Umsatz betrug 44 %. Niedermolekulare Isobutenoligomere wurden vom erhaltenen Polyisobuten durch Kugelrohrdestillation bei 120°C/3 bar abgetrennt. Das farblose Polyisobuten hatte ein mittleres Molekulargewicht von $M_n$ = 1850, eine Molekulargewichtsverteilung von D = 2,2 und einen Gehalt an endständigen Doppelbindungen (= α-Olefingehalt) von 71 mol-%. Der α+β-Olefingehalt betrug 99 mol-%.

Beispiel 2 und Vergleichsbeispiele 3 und 4 ("Raffinat I"/n-Hexan)

Beispiel 2 sowie die Vergleichsbeispiele 3 und 4 wurden wie in Beispiel 1 beschrieben, jedoch bei unterschiedlicher Verweilzeit und/oder Temperatur durchgeführt (Tab. 1).

Tabelle 1:

| Kontinuierlich Isobutenpolymerisation an $ZrO_2$-Katalysator B mit "Raffinat I"/n-Hexan (1:1) (Festbettfahrweise) | | | | | | | | |
|---|---|---|---|---|---|---|---|---|
| | T [°C] | Kat.-Bel. [g Isobuten/ g*h] | VWZ [h] | Umsatz [%] | α [mol-%] | α+β [mol-%] | $M_n$ | D |
| Bsp. 2 | -25 | 0,4 | 0,15 | 54 | 68 | 97 | 1860 | 2,1 |
| Vgl.-Bsp. 3 | -25 | 0,3 | 0,20 | 84 | 47 | 83 | 2000 | 2,3 |
| Vgl.-Bsp. 4 | -20 | 0,2 | 0,20 | 94 | 23 | 64 | 1330 | 2,2 |
| Kat.-Bel.: Katalysatorbelastung<br>VWZ: Verweilzeit<br>α: Anteil an α-Olefin<br>α + β: Anteil an α-Olefin + β-Olefin | | | | | | | | |

Beispiel 5 (Kontinuierliche Isobuten-Polymerisation in Suspension; Isobuten/Isobutan als Feed)

In einem 30 ml-Glasdruckgefäß mit Flüssigkeitseinleitungsrohr und Steigrohr mit Druckhaltung wurden unter Argon 1 g Katalysator A, der zuvor nochmals bei 180°C/0,3 mbar getrocknet worden war, und ca. 20 ml wasserfreies n-Hexan vorgelegt. Unter magnetischem Rühren wurde anschließend bei -20°C/6 bar ein Isobuten/Isobutan-Gemisch (Gew.-Verhältnis 1 : 3) kontinuierlich in den Reaktor zudosiert (44 g/h). Die Katalysatorbelastung betrug 11 g Isobuten/ g Kat. *h, die mittlere Verweilzeit ca. 0,4 h. Die Aufarbeitung des entspannten Reaktionsgemisches wurde folgendermaßen durchgeführt: Isobutan und nichtumgesetztes Isobuten wurden bei Raumtemperatur abgedampft. Niedermolekulare Isobutenoligomere wurden vom erhaltenen Polyisobuten durch Kugelrohrdestillation bei 120°C/0,3 bar abgetrennt. Die PIB-Ausbeute betrug 12 %. Das farblose Polyisobuten hatte ein mittleres Molekulargewicht von $M_n$ = 880, eine Molekulargewichtsverteilung von D = 2,5 und einen Gehalt an endständigen Doppelbindungen (= α-Olefingehalt von 65 mol-%. Der α+β-Olefingehalt betrug 90 mol-%.

Vergleichsbeispiel 6 und 7

Die Vergleichsbeispiele 6 und 7 wurden wie in Beispiel 5 beschrieben durchgeführt, jedoch bei höherer Temperatur, höherer Verweilzeit und einem Isobuten/Isobutan-Verhältnis von 1 : 1 durchgeführt (siehe Tab. 2).

Tabelle 2:

| Kontinuierliche Isobutenpolymerisation an $ZrO_2$-katalysator A mit Isobuten/Isobutan als Feed (Suspensionsfahrweise) | | | | | | | | | |
|---|---|---|---|---|---|---|---|---|---|
| | Isobuten/ Isobutan Gew. -Verh. | T [°C] | Kat.-Bel. [g Isobuten/ g*h] | VWZ [h] | Umsatz [%] | α [mol-%] | α β+ [mol-%] | $M_n$ | D |
| Vgl.-Bsp. 6 | 1:1 | -10 | 6,5 | 1,4 | 91 | 12 | 38 | 830 | 2,9 |
| Vgl.-Bsp. 7 | 1:1 | -10 | 5 | 1,8 | 99 | 22 | 65 | 990 | 2,9 |
| Gew.-Verh.: Gewichtsverhältnis<br>Kat.-Bel.: Katalysatorbelastung<br>VWZ: Verweilzeit<br>α: Anteil an α-Olefin | | | | | | | | | |

Beispiel 8

Ein 250 ml-Rohrreaktor wurde unter Argon mit 250 g Katalysator C gefüllt, der zuvor gesplittet (1,6-2,5 mm) und nochmals bei 180°C/0,3 mbar getrocknet worden war. Anschließend wurden bei -30°C/5 bar 520 g/h eines Isobuten/Isobutan/n-Hexan-Gemisches (Gew.-Verhältnis ca. 1:1:2, n-Hexan dient dabei als Lösungsmittel), das über einen Trockenturm mit 3 Ä-Molekularsieb getrocknet worden war, kontinuierlich durch den Reaktor gefahren. Die Katalysatorbelastung betrug hierbei 0,52 g Isobuten/g Kat.*h, die mittlere Verweilzeit ca. 0,1 h. Der Reaktor wurde in Rieselfahrweise mit Produktrückführung (ca. 35 kg/h) betrieben.

Die Reaktionsausträge wurden auf Raumtemperatur erwärmt und in eine Füllkörperkolonne (mit 25 theoretischen Trennstufen) geleitet, wo Isobutan mit nicht umgesetztem Isobuten von Hexan und Polymeren abgetrennt wurde (Bedingungen: 5 bar, Sumpftemperatur 131°C, Kopftemperatur 39°C, Rücklaufverhältnis 1,1). Dieser $C_4$-Strom wurde in eine zweite Kolonne (80 theoretische Trennstufen) weitergeführt, in der das Isobutan bei 60°C Sumpf- und 57°C Kopftemperatur/8 bar und einem Rücklaufverhältnis von 13 über Kopf genommen (95 Gew.-% Isobutan, 5 Gew.-% Isobuten) und ein Isobuten/Isobutan-Gemisch (48:52 Gew.) im Sumpf erhalten wurde, welches nach dem Entspannen auf 5 bar wieder ins Verfahren zurückgeführt wurde.

Der Sumpf aus der ersten Kolonne wurde gesammelt. Das zugesetzte Lösungsmittel n-Hexan wurde unter langsamer Absenkung des Drucks bis auf 0,3 mbar bei 50°C abdestilliert. Der Isobuten-Umsatz betrug 55%. Niedermolekulare Isobuten-Oligomere wurden vom erhaltenen Polyisobuten durch Destillation mit einem Sambay-Verdampfer bei 220°C/5 mbar abgetrennt. Das farblose Polyisobuten hatte ein mittleres Molekulargewicht $M_n$ = 1050, eine Molekulargewichtsverteilung von D = 1,8 und einen Gehalt an endständigen Doppelbindungen (α-Olefingehalt) von 70 mol-%. Der α+β-Olefingehalt betrug 92 mol-%.

**Patentansprüche**

1. Verfahren zur Herstellung von halogenfreiem, reaktivem Polyisobuten mit einem Gehalt an endständigen Doppelbindungen von mehr als 60 mol-% und einem mittleren Molekulargewicht $M_n$ von 800 bis 3000 Dalton durch kationische Polymerisation von Isobuten in flüssiger Phase an einem sauren, im wesentlichen halogenfreien heterogenen Katalysator, **dadurch gekennzeichnet, daß** man

   a) ein Isobuten enthaltendes Kohlenwasserstoffgemisch von im wesentlichen $C_4$-Kohlenwasserstoffen mit einem Isobutengehalt von 10 bis 80 Gew.-% als Edukt verwendet und

   b) eine kontinuierliche Polymerisation bei -30 bis 0°C und bei mittleren Verweilzeiten des Edukts von höchstens einer Stunde durchführt, wobei man
   Temperatur und Verweilzeit so wählt, daß der Umsatz des Isobutens weniger als 60 % beträgt und wobei man nach Trennung von dem entstandenen Polyisobuten in dem abreagierten Kohlenwasserstoffgemisch das Isobuten entweder anreichert und in die Polymerisation zurückführt oder einer mit der Polymerisation gekoppelten anderen Isobuten-Umsetzung zuführt.

2. Verfahren gemäß Anspruch 1, **dadurch gekennzeichnet, daß** man als Edukt vorwiegend Isobuten und Isobutan enthaltende Kohlenwasserstoffgemische von im wesentlichen $C_4$-Kohlenwasserstoffen mit einem Gehalt von 10 bis 60 Gew.-% Isobuten verwendet.

3. Verfahren gemäß Anspruch 2, **dadurch gekennzeichnet, daß** man in dem abreagierten Kohlenwasserstoffgemisch das Isobuten einer mit der Polymerisation gekoppelten Herstellung von Methyl-tert.-butylether zuführt.

4. Verfahren gemäß Anspruch 2, **dadurch gekennzeichnet, daß** man das abreagierte, nicht-umgesetztes Isobuten und Isobutan enthaltende Kohlenwasserstoffgemisch von im wesentlichen $C_4$-Kohlenwasserstoffen destillativ aufarbeitet und Isobuten oder eine an Isobuten angereicherte Fraktion in die Polymerisationsstufe (b) gemäß Anspruch 1 zurückführt.

5. Verfahren gemäß Anspruch 2, **dadurch gekennzeichnet, daß** man das abreagierte, nicht-umgesetztes Isobuten und Isobutan enthaltende Kohlenwasserstoffgemisch einer Dehydrierung unterwirft und danach in die Polymerisationsstufe zurückführt.

6. Verfahren gemäß Anspruch 1, **dadurch gekennzeichnet, daß** man heterogene Katalysatoren verwendet, ausgewählt aus der Gruppe bestehend aus

   a) Katalysatoren, die mindestens ein als Promotor wirksames Element der I., II., III., IV., V., VI., VII. oder VIII. Nebengruppe des Periodensystems der Elemente oder der II., III., IV., V. oder VI. Hauptgruppe des Periodensystems der Elemente oder mehrere dieser Elemente jeweils in Form einer sauerstoffhaltigen Verbindung und Zirkonium in Form einer sauerstoffhaltigen Verbindung enthalten und wobei der Katalysator keine technisch wirksamen Mengen an Halogen enthält,

b) Katalysatoren aus einem oder mehreren der Oxide der Elemente der V. und VI. Nebengruppe des Periodensystems der Elemente oder Katalysatoren, die eine oder mehrere oxidische Verbindungen eines oder mehrerer der Elemente der V. und VI. Nebengruppe des Periodensystems der Elemente auf einem von einer sauerstoffhaltigen Zirkoniumverbindung verschiedenen, nicht-zeolithischen oxidischen Trägermaterial enthalten, wobei der Katalysator keine technisch wirksamen Mengen an Halogen enthält und

c) Heteropolysäuren oder deren Salze.

7. Verfahren gemäß Anspruch 1, **dadurch gekennzeichnet, daß** man heterogene Katalysatoren verwendet, ausgewählt aus der Gruppe bestehend aus

a) Katalysatoren, die mindestens ein als Promotor wirksames Element der I., II., III., IV., V., VI., VII. oder VIII. Nebengruppe des Periodensystems der Elemente oder der II., III., IV., V. oder VI. Hauptgruppe des Periodensystems der Elemente oder mehrere dieser Elemente jeweils in Form einer sauerstoffhaltigen Verbindung und Zirkonium in Form einer sauerstoffhaltigen Verbindung enthalten und wobei der Katalysator keine technisch wirksamen Mengen an Halogen enthält und
b) Katalysatoren aus einem oder mehreren der Oxide der Elemente der V. und VI. Nebengruppe den Periodensystems der Elemente oder Katalysatoren, die eine oder mehrere oxidische Verbindungen eines oder mehrerer der Elemente der V. und VI. Nebengruppe den Periodensystems der Elemente auf einem von einer sauerstoffhaltigen Zirkoniumverbindung verschiedenen, nicht-zeolithischen oxidischen Trägermaterial enthalten, wobei der Katalysator keine technisch wirksamen Mengen an Halogen enthält.

8. Verfahren gemäß Anspruch 1, **dadurch gekennzeichnet, daß** man als heterogene Katalysatoren solche Katalysatoren verwendet, die mindestens ein als Promotor wirksames Element der I., II., III., IV., V., VI., VII. oder VIII. Nebengruppe des Periodensystems der Elemente oder der II., III., IV., V. oder VI. Hauptgruppe des Periodensystems der Elemente oder mehrere dieser Elemente jeweils in Form einer sauerstoffhaltigen Verbindung und Zirkonium in Form einer sauerstoffhaltigen Verbindung enthalten und wobei der Katalysator keine technisch wirksamen Mengen an Halogen enthält.

9. Verfahren gemäß Anspruch 1, **dadurch gekennzeichnet, daß** man als heterogene Katalysatoren solche Katalysatoren verwendet aus einem oder mehreren der Oxide der Elemente der V. und VI. Nebengruppe des Periodensystems der Elemente oder Katalysatoren, die eine oder mehrere oxidische Verbindungen eines oder mehrerer der Elemente der V. und VI. Nebengruppe des Periodensystems der Elemente auf einem von einer sauerstoffhaltigen Zirkoniumverbindung verschiedenen, nicht-zeolithischen oxidischen Trägermaterial enthalten, wobei der Katalysator keine technisch wirksamen Mengen an Halogen enthält.

10. Verfahren gemäß Anspruch 1, **dadurch gekennzeichnet, daß** man als heterogene Katalysatoren Katalysatoren aus der Gruppe der Heteropolysäuren und deren Salze verwendet.

## Claims

1. A process for preparing halogen-free, reactive polyisobutene having a terminal double bond content of more than 60 mol% and an average molecular weight $M_n$ of 800-3000 Dalton by cationic polymerization in the liquid phase of isobutene over an acidic, essentially halogen-free heterogeneous catalyst, which comprises

a) using, as starting material, a hydrocarbon mixture of essentially $C_4$-hydrocarbons comprising isobutene in an amount of from 10 to 80% by weight and

b) continuously polymerizing at from -30 to 0°C with average starting material residence times of one hour or less, with the proviso that
the temperature and the residence time are selected such that the isobutene conversion is less than 60% and, after separation from the resulting polyisobutene, the isobutene is either enriched in the partially converted hydrocarbon mixture and returned to the polymerization or passed to another isobutene reaction coupled with the polymerization.

2. A process as claimed in claim 1, wherein the starting material used is a hydrocarbon mixture of essentially $C_4$-hydrocarbons predominantly comprising isobutene and isobutane and having an isobutene content of from 10 to

60% by weight.

3. A process as claimed in claim 2, wherein, in the partially converted hydrocarbon mixture, the isobutene is passed to a methyl tert-butyl ether preparation process coupled with the polymerization.

4. A process as claimed in claim 2, wherein the partially converted hydrocarbon mixture of essentially $C_4$-hydrocarbons, comprising unconverted isobutene and isobutane, is worked up by distillation, and isobutene or an isobutene-enriched fraction is returned to the polymerization stage (b) as claimed in claim 1.

5. A process as claimed in claim 2, wherein the partially converted hydrocarbon mixture, comprising unconverted isobutene and isobutane, is subjected to a dehydrogenation process and then returned to the polymerization stage.

6. A process as claimed in claim 1, wherein the heterogeneous catalyst used is selected from the group consisting of

a) catalysts comprising one or more promoting elements from transition group I, II, III, IV, V, VI, VII or VIII of the Periodic Table of the Elements or from main group II, III, IV, V or VI of the Periodic Table of the Elements, in each case in the form of an oxygen-containing compound, and zirconium in the form of an oxygen-containing compound, the catalyst not containing technically effective amounts of halogen,

b) catalysts consisting of one or more oxides of the elements of transition groups V and VI of the Periodic Table of the Elements or catalysts comprising one or more oxidic compounds of one or more of the elements of transition groups V and VI of the Periodic Table of the Elements supported on a non-zeolitic oxidic support material which is not an oxygen-containing zirconium compound, the catalyst not containing technically effective amounts of halogen, and

c) heteropolyacids or salts thereof.

7. A process as claimed in claim 1, wherein the heterogeneous catalyst used is selected from the group consisting of

a) catalysts comprising one or more promoting elements from transition group I, II, III, IV, V, VI, VII or VIII of the Periodic Table of the Elements or from main group II, III, IV, V or VI of the Periodic Table of the Elements, in each case in the form of an oxygen-containing compound, and zirconium in the form of an oxygen-containing compound, the catalyst not containing technically effective amounts of halogen, and

b) catalysts consisting of one or more oxides of the elements of transition groups V and VI of the Periodic Table of the Elements or catalysts comprising one or more oxidic compounds of one or more of the elements of transition groups V and VI of the Periodic Table of the Elements supported on a non-zeolitic oxidic support material which is not an oxygen-containing zirconium compound, the catalyst not containing technically effective amounts of halogen.

8. A process as claimed in claim 1, wherein the heterogeneous catalyst used is a catalyst comprising one or more promoting elements from transition group I, II, III, IV, V, VI, VII or VIII of the Periodic Table of the Elements or from main group II, III, IV, V or VI of the Periodic Table of the Elements, in each case in the form of an oxygen-containing compound, and zirconium in the form of an oxygen-containing compound, the catalyst not containing technically effective amounts of halogen.

9. A process as claimed in claim 1, wherein the heterogeneous catalyst used is a catalyst consisting of one or more oxides of the elements of transition groups V and VI of the Periodic Table of the Elements or catalysts comprising one or more oxidic compounds of one or more of the elements of transition groups V and VI of the Periodic Table of the Elements supported on a non-zeolitic oxidic support material which is not an oxygen-containing zirconium compound, the catalyst not containing technically effective amounts of halogen.

10. A process as claimed in claim 1, wherein the heterogeneous catalyst used is selected from the group consisting of heteropolyacids and salts thereof.

**Revendications**

1. Procédé de préparation de polyisobutène réactif exempt d'halogène, présentant une teneur en doubles liaisons terminales de plus de 60% en moles et une masse moléculaire moyenne $M_n$ allant de 800 à 3000 Dalton, au moyen de la polymérisation cationique d'isobutène en phase liquide sur un catalyseur acide hétérogène essentiellement exempt d'halogène, **caractérisé en ce que** l'on

    a) utilise, en tant qu'éduit, un mélange d'hydrocarbures contenant de l'isobutène, principalement composé d'hydrocarbures en $C_4$ et présentant une teneur en isobutène allant de 10% à 80% en poids et
    b) réalise une polymérisation en continu à une température allant de -30°C à 0°C et avec des temps de séjour moyen de l'éduit d'au maximum une heure, dans lequel on choisit la température et le temps de séjour de façon à ce que la conversion de l'isobutène soit inférieure à 60% et où l'on concentre l'isobutène après une séparation d'avec le polyisobutène formé dans le mélange d'hydrocarbures ayant fini de réagir et on le recycle dans la polymérisation, ou bien on l'introduit dans une autre réaction d'isobutène couplée à la polymérisation.

2. Procédé selon la revendication 1, **caractérisé en ce que** l'on utilise principalement, en tant qu'éduit, des mélanges d'hydrocarbures contenant de l'isobutène et de l'isobutane, principalement composés d'hydrocarbures en $C_4$ et présentant une teneur en isobutène allant de 10% à 60% en poids.

3. Procédé selon la revendication 2, **caractérisé en ce que** l'on introduit l'isobutène dans le mélange d'hydrocarbures ayant fini de réagir dans une préparation d'éther méthylique de ter-butyle couplée à la polymérisation.

4. Procédé selon la revendication 2, **caractérisé en ce que** l'on soumet à une distillation le mélange d'hydrocarbures ayant fini de réagir, principalement composé d'hydrocarbures en $C_4$, contenant de l'isobutène et de l'isobutane n'ayant pas réagi, et **en ce que** l'on recycle l'isobutène ou une fraction enrichie en isobutène dans l'étape de polymérisation (b) selon la revendication 1.

5. Procédé selon la revendication 2, **caractérisé en ce que** l'on soumet le mélange d'hydrocarbures ayant fini de réagir, contenant l'isobutène et l'isobutane n'ayant pas réagi, à une déshydratation, puis **en ce qu'**on le recycle dans l'étape de polymérisation.

6. Procédé selon la revendication 1, **caractérisé en ce que** l'on utilise des catalyseurs hétérogènes choisis dans le groupe formé par

    a) des catalyseurs qui contiennent au moins un élément, efficace en tant que promoteur, des sous-groupes I, II, III, IV, V, VI, VII ou VIII de la Classification Périodique des Eléments ou des groupes principaux II, III, IV, V ou VI de la Classification Périodique des Eléments, ou plusieurs de ces éléments, chacun sous la forme d'un composé oxygéné, et du zirconium sous la forme d'un composé oxygéné, et où le catalyseur ne contient pas de quantités techniquement actives d'halogène,
    b) des catalyseurs à base d'un ou de plusieurs oxydes des éléments des sous-groupes V et VI de la Classification Périodique des Eléments ou des catalyseurs qui contiennent un ou plusieurs composés contenant un oxyde d'un ou de plusieurs des éléments des sous-groupes V et VI de la Classification Périodique des Eléments sur un support non zéolithique, contenant un oxyde, différent d'un composé du zirconium oxygéné, où le catalyseur ne contient pas de quantités techniquement actives d'halogène,
    c) des hétéropolyacides ou leurs sels.

7. Procédé selon la revendication 1, **caractérisé en ce que** l'on utilise des catalyseurs hétérogènes choisis dans le groupe formé par

    a) des catalyseurs qui contiennent au moins un élément, efficace en tant que promoteur, des sous-groupes I, II, III, IV, V, VI, VII ou VIII de la Classification Périodique des Eléments ou des groupes principaux II, III, IV, V ou VI de la Classification Périodique des Eléments, ou plusieurs de ces éléments, chacun sous la forme d'un composé oxygéné, et du zirconium sous la forme d'un composé oxygéné et où le catalyseur ne contient pas de quantités techniquement actives d'halogène, et
    b) des catalyseurs à base d'un ou de plusieurs oxydes des éléments des sous-groupes V et VI de la Classification Périodique des Eléments ou des catalyseurs, qui contiennent un ou plusieurs composés contenant un oxyde d'un ou de plusieurs des éléments des sous-groupes V et VI de la Classification Périodique des Eléments sur un support non zéolithique, contenant un oxyde, différent d'un composé du zirconium oxygéné,

où le catalyseur ne contient pas de quantités techniquement actives d'halogène.

8. Procédé selon la revendication 1, **caractérisé en ce que** l'on utilise, en tant que catalyseurs hétérogènes, les catalyseurs qui contiennent au moins un élément, efficace en tant que promoteur, des sous-groupes I, II, III, IV, V, VI, VII ou VIII de la Classification Périodique des Eléments ou des groupes principaux II, III, IV, V ou VI de la Classification Périodique des Eléments, ou plusieurs de ces éléments, chacun sous la forme d'un composé oxygéné, et du zirconium sous la forme d'un composé oxygéné et où le catalyseur ne contient pas de quantités techniquement actives d'halogène.

9. Procédé selon la revendication 1, **caractérisé en ce que** l'on utilise, en tant que catalyseurs hétérogènes, les catalyseurs à base d'un ou de plusieurs oxydes des éléments des sous-groupes V et VI de la Classification Périodique des Eléments ou des catalyseurs qui contiennent un ou plusieurs composés contenant un oxyde d'un ou de plusieurs éléments des sous-groupes V et VI de la Classification Périodique des Eléments sur un support non zéolithique, contenant un oxyde, différent d'un composé du zirconium oxygéné, où le catalyseur ne contient pas de quantités techniquement actives d'halogène.

10. Procédé selon la revendication 1, **caractérisé en ce que** l'on utilise, en tant que catalyseurs hétérogènes, des catalyseurs du groupe des hétéropolyacides et leurs sels.